# EUROPÄISCHE PATENTSCHRIFT

(11) **EP 4 566 497 B1**
(45) Veröffentlichungstag und Bekanntmachung des Hinweises auf die Patenterteilung: **19.08.2026**
(21) Anmeldenummer: 24211675.4
(22) Anmeldetag: 08.11.2024
(51) Int. Cl.: A47L 5/36, A47L 9/00, A47L 11/24, A47L 11/283, A47L 9/28

(54) **TREPPENSTEIGEINHEIT FÜR EINEN BODENROBOTER, BODENROBOTER, REINIGUNGSSYSTEM UND VERFAHREN ZUR REINIGUNG**
STAIR CLIMBING UNIT FOR A FLOOR ROBOT, FLOOR ROBOT, CLEANING SYSTEM AND METHOD FOR CLEANING
UNITÉ DE MONTÉE D'ESCALIER POUR ROBOT DE SOL, ROBOT DE SOL, SYSTÈME DE NETTOYAGE ET PROCÉDÉ DE NETTOYAGE

(30) Priorität: 05.12.2023 DE 102023212253
(43) Veröffentlichungstag der Anmeldung: 11.06.2025
(73) Patentinhaber: BSH Hausgeräte GmbH, 81739 München (DE)
(72) Erfinder: Schnitzer, Frank, 97616 Bad Neustadt (DE); Schmitt, Kai, 97633 Saal (DE)

(56) Entgegenhaltungen:
- CN-A- 106 388 732
- CN-A- 106 426 083
- CN-A- 116 919 237
- CN-U- 212 243 608
- KR-A- 20160 089 997

## Beschreibung

Die vorliegende Erfindung betrifft eine Treppensteigeinheit für einen Bodenroboter. Die Erfindung betrifft weiter einen Bodenroboter zur Reinigung einer Bodenfläche. Die Erfindung betrifft weiter ein Reinigungssystem zur Reinigung von zwei über eine Treppe verbundene Bodenflächen. Die Erfindung betrifft weiter ein Verfahren zur Reinigung von zwei über eine Treppe verbundene Bodenflächen.

Ein Bodenroboter ist dazu eingerichtet, eine Bodenfläche weitgehend selbsttätig zu reinigen. Soll der Bodenroboter zwei über eine Treppe miteinander verbundene Bodenflächen reinigen, so ist zumeist erforderlich, dass der Bodenroboter von einem Bediener von der einen Bodenfläche zu der anderen Bodenfläche getragen wird. Demnach kann der Bodenroboter nicht selbsttätig zwischen den beiden über eine Treppe miteinander verbundenen Bodenflächen wechseln, um auch jene Bodenfläche reinigen zu können, auf der er sich aktuell nicht befindet. Außerdem ist ein Tragen des Bodenroboters von einer Bodenfläche zur anderen Bodenfläche mühsam für den Bediener.

Das Dokument CN 212 243 608 U beschreibt eine Treppensteigeinheit für einen Bodenroboter und einen Bodenroboter nach den Oberbegriffen der unabhängigen Ansprüche 1 und 11.

Eine der vorliegenden Erfindung zu Grunde liegende Aufgabe besteht in der Bereitstellung einer verbesserten Technik zur weitgehend selbsttätigen Reinigung von zwei über eine Treppe miteinander verbundenen Bodenflächen. Eine weitere der vorliegenden Erfindung zu Grunde liegende Aufgabe besteht in der Bereitstellung eines verbesserten Verfahrens zur weitgehend selbsttätigen Reinigung von zwei über eine Treppe miteinander verbundenen Bodenflächen. Die Erfindung löst diese Aufgaben mittels der Gegenstände der unabhängigen Ansprüche. Unteransprüche geben bevorzugte Ausführungsformen wieder.

Eine Treppensteigeinheit für einen Bodenroboter umfasst eine Aufnahmevorrichtung für den Bodenroboter; ferner eine von einem Aktor bewegbare Treppensteigvorrichtung, mit welcher die Treppensteigeinheit eine Treppe steigen kann; ferner eine mit dem Aktor wirkverbundene Versorgungsschnittstelle; wobei die Versorgungsschnittstelle mit dem Bodenroboter koppelbar ist, so dass der Aktor vom Bodenroboter versorgbar ist. Bevorzugt ist die Aufnahmevorrichtung ein Halteplatz, ein Parkplatz, eine Haltestelle, und/oder dergleichen. Bevorzugt umfasst die Aufnahmevorrichtung ein Mittel, insbesondere eine Fixiervorrichtung, zur Fixierung des Bodenroboters mit der Treppensteigeinheit, insbesondere ein Mittel für eine form- und/oder reibschlüssige Verbindung des Bodenroboters mit der Treppensteigeinheit, insbesondere ein Mittel zum Festhalten, Verrasten, Verankern, und/oder dergleichen.

Bevorzugt umfasst die Treppensteigeinheit eine Low-Level Steuereinheit, besonders bevorzugt umfasst die Treppensteigeinheit nur eine Low-Level Steuereinheit. Die Low-Level Steuereinheit kann beispielsweise Treiber, Aktuatoransteuerung, Motoransteuerung, und/oder dergleichen umfassen, mit welcher insbesondere der Aktor ansteuerbar ist. Insbesondere umfasst die Treppensteigeinheit keine High-Level Steuereinheit und/oder High-Level-Logik-Rechnereinheit. Zweckmäßig steuert der Bodenroboter die Treppensteigeinheit nach Kopplung mit dem Bodenroboter. Zweckmäßig umfasst der Bodenroboter ein Steuergerät, insbesondere mit einer High-Level Steuereinheit und/oder High-Level-Logik-Rechnereinheit, mit welchem die Treppensteigeinheit, und insbesondere der Aktor, ansteuerbar ist. Zweckmäßig ist eine Regelkaskade vorgesehen. Insbesondere kann, insbesondere weiter, innen in der Regelkaskade die Low-Level-Steuerung der Treppensteigeinheit vorgesehen sein. Insbesondere kann, insbesondere weiter, außen die High-Level-Logik des Bodenroboters vorgesehen sein. Zweckmäßig ist die Low-Level-Steuerung in einem inneren Kreis und die High-Level-Steuerung in einem äußeren Kreis, wobei besonders zweckmäßig der äußere Kreis mit einer niedrigeren Wiederholfrequenz ansteuert als der innere Kreis. Beispielhaft kann die Motoransteuerung für den Aktor der Treppensteigeinheit, insbesondere der innere Kreis, in einer Größenordnung von einem etwa mehreren 10 ms dauernden Takt steuern, wohingegen beispielhaft die Steuerung für den Bodenroboter, insbesondere der äußere Kreis, in einer Größenordnung von einem etwa mehrere Zehntelsekunden dauernden Takt steuern kann.

Unter Zuhilfenahme der Treppensteigeinheit kann der Bodenroboter weitgehend selbsttätig die beiden über eine Treppe verbundenen Bodenflächen reinigen. Dadurch, dass die Treppensteigeinheit vorteilhaft vom Bodenroboter ansteuerbar ist, kann die Treppensteigeinheit mit vergleichsweise einfacher Steuereinheit auskommen. Dadurch, dass die Treppensteigeinheit die Treppensteigvorrichtung umfasst, kann vorteilhaft eine Treppensteigvorrichtung beim Bodenroboter entfallen. Somit ist der Bodenroboter kompakt und insbesondere spezialisiert auf die Reinigung einer Bodenfläche.

Bevorzugt umfasst die Versorgungsschnittstelle einen elektrischen Kontakt. Bevorzugt ist der Aktor vom Bodenroboter über den elektrischen Kontakt mit elektrischer Energie versorgbar. Unter einem elektrischen Kontakt kann, in breitester Lesart, auch ein kontaktloser Kontakt verstanden werden, mit welchem beispielsweise über Induktion elektrische Energie bereitgestellt wird. Vorteilhaft ist der elektrische Kontakt über eine Mechanik gebildet. Bevorzugt ist der elektrische Kontakt gefedert gelagert. Über die federnde Lagerung kann vorteilhaft sichergestellt werden, dass der Kontakt, insbesondere möglichst, unterbrechungsfrei sichergestellt ist.

Zweckmäßig umfasst die Versorgungsschnittstelle eine Kommunikationsschnittstelle. Zweckmäßig ist der Aktor vom Bodenroboter über die Kommunikationsschnittstelle ansteuerbar. Dadurch kann zweckmäßigerweise der Bodenroboter die Treppensteigeinheit steuern. Insbesondere kann damit die in einem Bodenroboter verbaute, vergleichsweise komplexe Steuer- und Regelungstechnik verwendet werden, um die Treppensteigeinheit anzusteuern.

Es kann weiterhin zweckmäßig sein, dass die Kommunikationsschnittstelle als elektrischer Kontakt und/oder drahtlos ausgebildet ist. Als drahtlose Verbindung kann beispielsweise WLAN, Bluetooth, oder dergleichen verstanden werden. Bevorzugt ist ein elektrischer Kontakt vorgesehen, der beispielsweise mechanisch ausgebildet ist. Vorteilhaft ist der elektrische Kontakt über eine Mechanik gebildet. Bevorzugt ist der elektrische Kontakt gefedert gelagert. Über die federnde Lagerung kann vorteilhaft sichergestellt werden, dass der Kontakt, insbesondere möglichst, unterbrechungsfrei sichergestellt ist. Zweckmäßig erkennt der Bodenroboter über die Kommunikationsschnittstelle die Treppensteigeinheit. Insbesondere erkennt der Bodenroboter, dass, insbesondere dem Bodenroboter, neue Funktionen, wie beispielsweise Treppensteigen unter Verwendung der Treppensteigeinheit, zur Verfügung stehen.

Vorteilhaft umfasst die Treppensteigeinheit einen Notakku. Der Notakku soll insbesondere eine unterbrechungsfreie Energieversorgung der Treppensteigeinheit sicherstellen, beispielsweise für den Fall, dass die Energieversorgung, insbesondere temporär, zum Bodenroboter abbricht.

Vorzugsweise umfasst die Aufnahmevorrichtung ein Mittel, insbesondere eine Fixiervorrichtung, zur Fixierung des Bodenroboters. Beispielsweise kann ein solches Mittel eine Vertiefung sein, in welcher bevorzugt eines oder mehrere Räder des Bodenroboters einsinken können. Durch das Mittel, insbesondere die Fixiervorrichtung, kann bevorzugt sichergestellt werden, dass beim Überwinden einer Treppe der Bodenroboter sicher mit der Treppensteigeinheit verbunden ist.

Zweckmäßig ist die Treppensteigeinheit und/oder die Aufnahmevorrichtung symmetrisch, insbesondere spiegelsymmetrisch, bevorzugt spiegelsymmetrisch zu einer Fahrtrichtung des Bodenroboters, insbesondere zur Fahrtrichtung des Bodenroboters bei Auffahrt auf und/oder Abfahrt von der Treppensteigeinheit. Bevorzugt ist die Treppensteigeinheit spiegelsymmetrisch zu einer Symmetrieebene. Die Symmetrieebene ist insbesondere parallel zu einer Trittkante einer Stufe der Treppe. Insbesondere liegt die Fahrtrichtung des Bodenroboters beim Auf- und/oder Abfahren von der Treppensteigeinheit, insbesondere zeitweise, in der Symmetrieebene. Dadurch kann der Bodenroboter gut auf die Treppensteigeinheit auf- und abfahren, insbesondere ohne, dass die Treppensteigeinheit ein Wendemanöver vor und/oder nach dem Überwinden der Treppe durchführen muss.

Vorteilhaft umfasst die Treppensteigeinheit eine Erkennungsvorrichtung. Bevorzugt erkennt der Bodenroboter die Treppensteigeinheit anhand der Erkennungsvorrichtung.

Vorzugsweise umfasst die Treppensteigeinheit eine Aussparung, insbesondere mindestens eine Aussparung, bevorzugt mindestens zwei Aussparungen, insbesondere höchstens sechs Aussparungen, insbesondere höchstens vier Aussparungen. Bevorzugt erhält der Bodenroboter, der auf der Aufnahmevorrichtung aufgenommen ist, einen, insbesondere optischen, Zugang zu einer Bodenfläche, insbesondere durch die Aussparung. Dadurch können, insbesondere am Unterboden des Bodenroboters angeordnete, Sensoren die Bodenfläche, insbesondere die Treppenstufen der Bodenfläche, erkennen. Solche Sensoren können beispielsweise Treppenstufenerkennungssensoren, insbesondere Cliff-Sensoren, sein. Unter optischen Zugang kann auch ein Ultraschallzugang verstanden werden, zumindest im weiteren Sinne.

Ein Bodenroboter zur Reinigung einer Bodenfläche umfasst ein Steuergerät zum Steuern des Bodenroboters; ferner einen Energiespeicher zum Speichern von elektrischer Energie; ferner eine Koppelvorrichtung, wobei die Koppelvorrichtung mit einer Versorgungsschnittstelle einer hierin beschriebenen Treppensteigeinheit koppelbar ist; wobei bei Kopplung der Koppelvorrichtung mit der Versorgungsschnittstelle ein Aktor der Treppensteigeinheit vom Steuergerät ansteuerbar ist und/oder mit elektrischer Energie aus dem Energiespeicher versorgbar ist.

Bevorzugt umfasst der Bodenroboter einen Sensor, bevorzugt mehr als einen Sensor. Insbesondere sind Signale des Sensors zur Steuerung des Bodenroboters, insbesondere über das Steuergerät, vorgesehen. Zweckmäßig können Signale des Sensors des Bodenroboters zur Steuerung des Aktors der Treppensteigeinheit durch das Steuergerät des Bodenroboters verwendet werden.

Ein Reinigungssystem zur Reinigung von zwei über eine Treppe verbundenen Bodenflächen umfasst eine hierin beschriebene Treppensteigeinheit; ferner einen hierin beschriebenen Bodenroboter; wobei in einem gekoppelten Zustand der Bodenroboter auf der Aufnahmevorrichtung aufgenommen ist und die Koppelvorrichtung des Bodenroboters mit der Versorgungsschnittstelle der Treppensteigeinheit gekoppelt ist; sodass im gekoppelten Zustand der Bodenroboter den Aktor der Treppensteigvorrichtung der Treppensteigeinheit ansteuert und/oder mit elektrischer Energie versorgt, wodurch die Treppensteigeinheit mit dem Bodenroboter die Treppe steigt.

Ein Verfahren zur Reinigung von zwei über eine Treppe verbundenen Bodenflächen mit einem hierin beschriebenen Reinigungssystem, umfasst mindestens die folgenden Verfahrensschritte:
- Aufnehmen des Bodenroboters auf der Aufnahmevorrichtung der Treppensteigeinheit;
- Kopplung der Koppelvorrichtung des Bodenroboters mit der Versorgungsschnittstelle der Treppensteigeinheit;
- Steuerung des Aktors der Treppensteigeinheit mit dem Steuergerät des Bodenroboters und/oder Versorgung des Aktors der Treppensteigeinheit mit Energie aus dem Energiespeicher des Bodenroboters;
- so dass die Treppensteigvorrichtung bewegt wird, und die Treppensteigeinheit mit dem Bodenroboter die Treppe steigt.

Unter zwei über eine Treppe verbundenen Bodenflächen ist insbesondere mindestens zwei über eine Treppe verbundenen Bodenflächen zu verstehen.

Bevorzugt kann der Bodenroboter beim Einfahren auf die Aufnahmevorrichtung mindestens zeitweise etwa parallel zu einer Trittkante einer Stufe der Treppe fahren. Weiter bevorzugt kann der Bodenroboter beim Ausfahren aus der Ausfahrvorrichtung mindestens zeitweise etwa parallel zu einer Trittkante einer Stufe der Treppe fahren.

Vorteilhaft werden Signale von einem Sensor des Bodenroboters zur Steuerung des Aktors der Treppensteigeinheit durch das Steuergerät des Bodenroboters verwendet. Bevorzugt werden nur die Signale des Sensors des Bodenroboters verwendet, insbesondere wird kein Sensor der Treppensteigeinheit benötigt. Ein Sensor des Bodenroboters ist beispielsweise ein Navigationssensor, eine Kamera, ein Cliff-Sensor, ein Wandfolgesensor und/oder dergleichen. Bevorzugt werden mehrere Sensoren des Bodenroboters verwendet.

Die Erfindung wird nun unter Bezug auf die beiliegenden Figuren genauer beschrieben, in denen:
- Figur 1: eine perspektivische Obenansicht eines Bodenroboters;
- Figur 2: eine perspektivische Untenansicht des Bodenroboters;
- Figur 3: eine perspektivische Obenansicht einer Treppensteigeinheit;
- Figur 4: eine weitere perspektivische Obenansicht der Treppensteigeinheit;
- Figur 5: eine perspektivische Untenansicht der Treppensteigeinheit;
- Figur 6: eine perspektivische Ansicht der Treppensteigeinheit in einem Zwischenzustand;
- Figuren 7 bis 32: verschiedene Ansichten einzelner Verfahrensschritte eines den Bodenroboter und die Treppensteigeinheit umfassenden Reinigungssystems beim Reinigen von zwei über eine Treppe verbundenen Bodenflächen
darstellen.

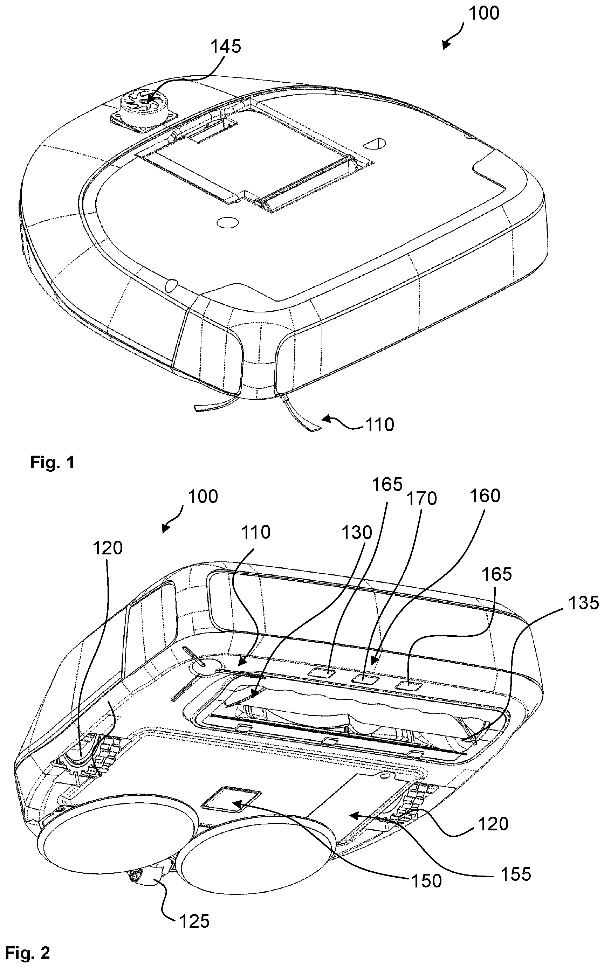

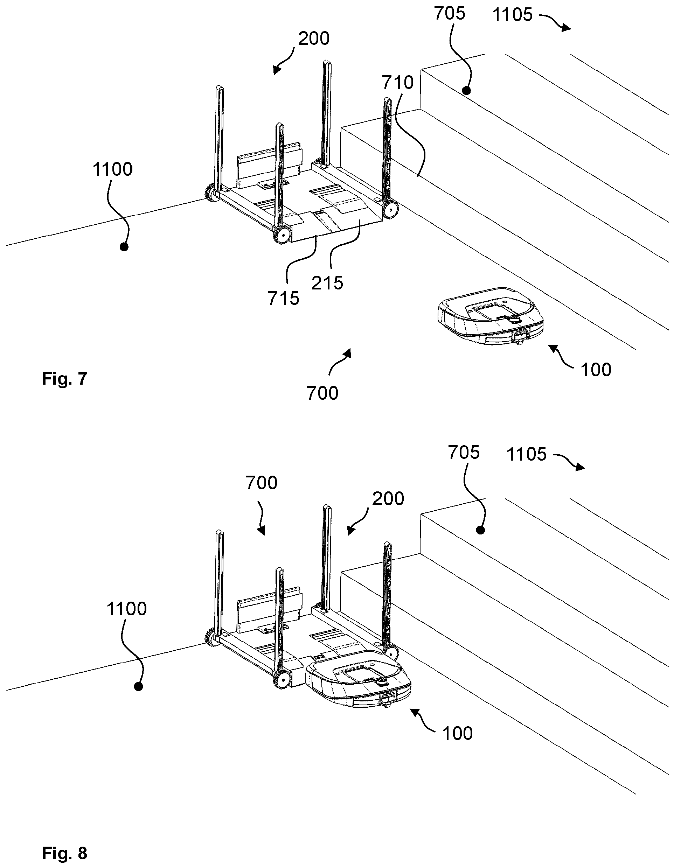

Figur 1 zeigt einen Bodenroboter 100, der dazu eingerichtet ist, eine in Fig. 7 gezeigte Bodenfläche 1100, 1105 zu reinigen. Figur 1 zeigt den Bodenroboter 100 in einer Ansicht von oben, Figur. 2 zeigt den Bodenroboter in einer Ansicht von unten.

Am Bodenroboter 100 ist eine Reinigungsvorrichtung 110, im Ausführungsbeispiel beispielhaft in Form einer Seitenbürste, ausgebildet. Zum Antrieb des Bodenroboters 100 sind beispielhaft zwei seitliche Antriebsräder 120 und ein, insbesondere in einer Fahrtrichtung hinten liegendes, Stützrad 125 vorgesehen. Die Antriebsräder 120 und das Stützrad sind insbesondere so ausgelegt, dass der Bodenroboter 100 kleinere Bodenunebenheiten, wie beispielsweise Türschwellen, und/oder kleinere Steigungen, überwinden kann. Unter "kleiner" sind insbesondere solche Bodenunebenheiten und/oder Steigungen zu verstehen, die in einem Wohn- und/oder Büroraum vorliegen können. Eine Höhe einer überwindbaren Erhebung kann im Bereich des Durchmessers, insbesondere des halben Durchmessers, bevorzugt weniger als des halben Durchmessers, eines Rads liegen. Eine Höhe kann insbesondere mindestens etwa 10 mm, bevorzugt mindestens etwa 15 mm, besonders bevorzugt mindestens etwa 20 mm, ganz besonders bevorzugt mindestens etwa 22 mm und/oder höchstens etwa 40 mm, bevorzugt höchstens etwa 30 mm, besonders bevorzugt höchstens etwa 25 mm, ganz besonders bevorzugt höchstens etwa 22 mm betragen. Ein Durchmesser eines Rades kann mindestens etwa 50 mm, bevorzugt mindestens etwa 60 mm, besonders bevorzugt mindestens etwa 70 mm, und/oder höchstens etwa 90 mm, bevorzugt höchstens etwa 80 mm, besonders bevorzugt höchstens etwa 75 mm betragen.

Auf einer Unterseite des Bodenroboters 100 befindet sich ein Saugmund 130, in welchem optional eine Walze 135, beispielsweise eine Borstenwalze, angebracht ist. Der Bodenroboter 100 umfasst ein in Figur 1 nicht dargestelltes Gebläse, welches dazu eingerichtet ist, einen Luftstrom durch den Saugmund 130 einzusaugen, um Schmutz von der Bodenfläche 1100, 1105 aufzunehmen. Der Bodenroboter 100 kann eine Nassreinigungseinheit, beispielsweise umfassend einen Wassertank, eine Pumpe, Wischpads, und/oder dergleichen, umfassen.

Weiter bevorzugt umfasst der Bodenroboter 100 wenigstens einen Sensor 145 zur Abtastung eines Umfelds. Der Sensor 145 kann hinter einer Abdeckung angeordnet sein. Zweckmäßig ist die Abdeckung für die zur Sensierung erforderlichen Wellen, wie beispielsweise elektrische, magnetische und/oder elektromagnetische Wellen und/oder Schallwellen, oder dergleichen, durchlässig. Beispielhaft ist ein Sensor 145 eine Kamera, ein Radarsensor, ein Ultraschallsensor, ein Cliff-Sensor, ein Wandfolgesensor und/oder ein LiDAR-Sensor. Es kann zweckmäßig sein, dass der Sensor 145, insbesondere der Cliff-Sensor, an der Unterseite des Bodenroboters 100 ausgebildet ist, und vorzugsweise im bestimmungsgemäßen Betrieb die zu reinigende Bodenfläche sensiert. Die Sensoren 145 sind beispielsweise vorgesehen, um den Bodenroboter 100 zu navigieren, insbesondere für eine Lokalisierung, zur Hinderniserkennung, und/oder als Eingangsdaten für eine Fahrtplanung.

Der Bodenroboter 100 umfasst ein Steuergerät 150. Das Steuergerät 150 ist dazu eingerichtet, den Bodenroboter 100 zu steuern. Das Steuergerät 150 umfasst insbesondere eine High-Level-Logik-Rechnereinheit. Diese ermöglicht das insbesondere vollständig autonome Bewegen des Bodenroboters 100 auf der Bodenfläche 1100, 1105. Das Steuergerät 150 verarbeitet hierbei nicht nur die vom Sensor 145 erfassten Daten, sondern berechnet auch Navigationsrouten und steuert die Antriebsräder an.

Der Bodenroboter 100 umfasst einen Energiespeicher 155, beispielsweise einen Akku. Der Energiespeicher 155 versorgt den Bodenroboter 100, insbesondere das Steuergerät 150, die Antriebsräder 120, die Reinigungsvorrichtung 110, den Motor der Walze 135 und/oder das Gebläse mit elektrischer Energie. Der Energiespeicher 155 ist bevorzugt an einer in den Figuren nicht dargestellten Ladestation aufladbar. Der Bodenroboter 100 umfasst eine Koppelvorrichtung 160. Mit der Koppelvorrichtung 160 ist der Bodenroboter 100 zur Ladestation elektrisch koppelbar. Im Ausführungsbeispiel umfasst die Koppelvorrichtung 160 zwei elektrische Ladekontakte 165 und einen elektrischen Kommunikationskontakt 170. Bevorzugt ist der elektrische Kommunikationskontakt 170 zwischen den beiden elektrischen Ladekontakten 165 angeordnet. Die Koppelvorrichtung 160 ist bevorzugt an der Unterseite, also der der Bodenfläche 1100, 1105 zugewandten Seite des Bodenroboters 100 angeordnet. Die Koppelvorrichtung 160 ist bevorzugt in einem in Fahrtrichtung vorne liegenden Abschnitt der Unterseite des Bodenroboters 100 angeordnet. Die Ladekontakte 165 sind bevorzugt vorgesehen, um Strom für das Laden des Energiespeichers 155 zu übertragen. Der Kommunikationskontakt 170 ist bevorzugt vorgesehen, um mit der Ladestation uni- und/oder bidirektional zu kommunizieren, beispielsweise zur Entleerung der Staubbox, zum Befüllen des Wassertanks, oder dergleichen. Die Koppelvorrichtung 160, insbesondere die Ladekontakte 165 und/oder der Kommunikationskontakt 170, können kabelgebunden und/oder kabellos sein. Das Aufladen kann kabellos beispielsweise über Induktion erfolgen. Die Kommunikation kann kabellos beispielsweise über Funk, WLAN, Bluetooth, und/oder Infrarot erfolgen.

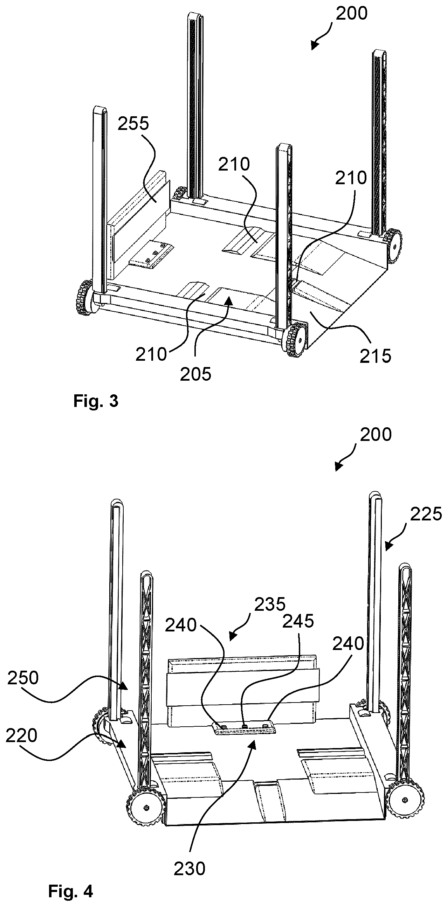

Fig. 3 zeigt eine Treppensteigeinheit 200. Die Treppensteigeinheit 200 umfasst eine Aufnahmevorrichtung 205. Die Aufnahmevorrichtung 205 ist vorgesehen, den Bodenroboter 100 aufzunehmen. Im Weitesten Sinne kann die Aufnahmevorrichtung 205 als Halteplatz, Parkplatz, oder dergleichen für den Bodenroboter 100 aufgefasst werden. Bevorzugt umfasst die Aufnahmevorrichtung 205 mindestens eine, bevorzugt etwa ebene, und besonders bevorzugt etwa horizontale, Fläche, auf welcher der Bodenroboter 100 halten und/oder parken kann. Im Ausführungsbeispiel umfasst die Aufnahmevorrichtung 205 eine Fixiervorrichtung 210. Im Ausführungsbeispiel ist die Fixiervorrichtung 210 als, bevorzugt keilartige, Vertiefung ausgebildet. Die Vertiefung ist zur Aufnahme des Antriebsrads 120 des Bodenroboters 100 vorgesehen. Im Ausführungsbeispiel sind zwei Vertiefungen, nämlich je eine Vertiefung für je ein Antriebsrad 120, vorgesehen. Es kann vorteilhaft sein, eine Vertiefung für das Stützrad 125 vorzusehen. In einem weiteren, in den Figuren nicht dargestellten Ausführungsbeispiel, kann die Fixiervorrichtung 210 den Bodenroboter 100 fest mit der Treppensteigeinheit 200 fixieren, beispielsweise krallen, einhaken, klemmen, und/oder dergleichen.

Die Treppensteigeinheit 200 umfasst eine Rampe 215. Über die Rampe 215 kann der Bodenroboter 100 von der Bodenfläche 1100, 1105 auf die Aufnahmevorrichtung 205 auffahren, und insbesondere von der Aufnahmevorrichtung 205 auf die Bodenfläche 1100, 1105 abfahren. Die Rampe 215 ist bevorzugt etwa eben. Die Rampe 215 ist insbesondere geneigt, so dass der Höhenunterschied zwischen Bodenfläche 1100, 1105 und Aufnahmevorrichtung 205 von der Rampe 215 etwa ausgeglichen wird. Bevorzugt ist die Rampe 215 breiter als der Bodenroboter 100, insbesondere breiter als die Spur der Antriebsräder 120 des Bodenroboters 100. Dadurch ist insbesondere genügend Platz, so dass der Bodenroboter 100 eigenständig Auf- und Abfahren kann, bevorzugt bei eventuell auftretender Ungenauigkeiten der Steuerung des Bodenroboters 100.

Die Treppensteigeinheit 200 umfasst eine in Fig. 4 gezeigte, von einem Aktor 220 bewegbare Treppensteigvorrichtung 225. Mithilfe der Treppensteigvorrichtung 225 kann die Treppensteigeinheit 200, insbesondere zusammen mit dem Bodenroboter 100, eine Treppe überwinden, insbesondere hinauf- und/oder hinabsteigen. Wie die Treppensteigeinheit 200 zusammen mit dem Bodenroboter 100 eine Treppe überwinden kann, wird weiter unten beschrieben.

Die Treppensteigeinheit 200 umfasst eine Versorgungsschnittstelle 230. Die Versorgungsschnittstelle 230 ist mit dem Bodenroboter 100, bevorzugt mit der Koppelvorrichtung 160 des Bodenroboters 100 koppelbar. Über die Koppelvorrichtung 160, insbesondere nach einer Kopplung des Bodenroboters 100 mit der Treppensteigeinheit 200 über die Versorgungsschnittstelle 230 und Koppelvorrichtung 160, ist der Aktor 220 mit dem Bodenroboter 100 wirkverbunden und insbesondere vom Bodenroboter 100 versorgbar. Unter versorgbar kann beispielsweise eine Energieversorgung und/oder Informationsversorgung, insbesondere eine Einwege- oder Zweiwege-Informationsversorgung, verstanden werden.

Der Aktor 220 ist im weitesten Sinne ein Element, welches mechanische Bewegungen umsetzt. Hierunter kann beispielsweise ein rein mechanischer Aktor 220 verstanden werden, der beispielsweise über die Koppelvorrichtung 160 und Versorgungsschnittstelle 230 rein mechanisch vom Bodenroboter 100 angetrieben ist. Im Ausführungsbeispiel ist als Aktor 220 ein elektromechanischer Aktor 220, beispielsweise ein Elektromotor, verwendet. Der Bodenroboter 100 steuert den Aktor 220 hierbei insbesondere über das Steuergerät 150 an, und versorgt den Aktor 220 optional mit Energie aus dem Energiespeicher 155. Die Treppensteigeinheit 200 nutzt hierbei die High-Level-Logik des Steuergeräts 150 des Bodenroboters 100, inklusive dessen Sensoren 145. Die Treppensteigeinheit 200 umfasst bevorzugt eine Low-Level-Steuereinheit, wie beispielsweise Treiber und/oder Ansteuerung, insbesondere Motoransteuerung, für den Aktor 220. Die Low-Level-Steuereinheit ist insbesondere nur vorgesehen, um die angeforderte Bewegung des Steuergeräts 150 des Bodenroboters 100 umzusetzen.

Bevorzugt ist die Low-Level-Steuereinheit in einem Gehäuse der Treppensteigeinheit 200 angeordnet.

Optional kann zweckmäßig sein, dass die Treppensteigeinheit 200 Sensorik 235, beispielsweise mindestens einen Sensor, umfasst. Die Sensorik 235 ist vorgesehen, um Stufen zu erkennen, insbesondere um Höhe und/oder Tiefe und/oder Abstand von einer zur nächsten Stufe zu erkennen. Die von der Sensorik 235 erfassten Informationen werden bevorzugt dem Steuergerät 150 des Bodenroboters 100 zur Verfügung gestellt.

Die Versorgungsschnittstelle 230 umfasst im Ausführungsbeispiel zwei elektrische Kontakte 240. Die Ladekontakte 165 des Bodenroboters 100 sind mit den elektrischen Kontakten 240 der Treppensteigeinheit 200 koppelbar. Insbesondere versorgt der Bodenroboter 100 über die gekoppelten elektrischen Kontakte 240 und Ladekontakte 165 die Treppensteigeinheit 200, und insbesondere den Aktor 220, mit elektrischer Energie, bevorzugt aus dem Energiespeicher 155. Bevorzugt sind die elektrischen Kontakte 240 federnd gelagert. Dadurch kann sichergestellt werden, dass beispielsweise bei einer, insbesondere kleinen, Relativbewegung von Bodenroboter 100 und Treppensteigeinheit 200, der Kontakt hergestellt bleibt. Solch eine Relativbewegung kann insbesondere beim Treppensteigen auftreten.

Die Versorgungsschnittstelle 230 umfasst eine Kommunikationsschnittstelle 245. Im Ausführungsbeispiel ist die Kommunikationsschnittstelle 245 beispielhaft zwischen den elektrischen Kontakten 240 angeordnet. Der Kommunikationskontakt 170 des Bodenroboters 100 ist mit der Kommunikationsschnittstelle 245 der Treppensteigeinheit 200 koppelbar. Insbesondere kann der Bodenroboter 100 hierüber den Aktor 220 ansteuern. Bevorzugt kann der Bodenroboter 100 hierüber Informationen, beispielsweise von der Sensorik 235 erhalten. Es kann bevorzugt sein, dass die Kommunikationsschnittstelle 245 als elektrischer Kontakt und/oder drahtlos, beispielsweise über WIFI, Bluetooth, NFC, oder dergleichen, ausgebildet ist.

In einem weiteren Ausführungsbeispiel kann die Treppensteigeinheit 200 einen Notakku 250 umfassen. Der Notakku 250 ist insbesondere vorgesehen, um die Treppensteigeinheit 200 mit elektrischer Energie so lange zu versorgen, wie eine Unterbrechung, insbesondere eine ungewollte Unterbrechung, der Energieversorgung durch den Energiespeicher 155 erfolgt. Eine solche ungewollte Unterbrechung kann beispielsweise beim dynamischen Treppensteigen eintreten, bei welchem der Bodenroboter 100 relativ zur Treppensteigeinheit 200 bewegt wird. Eine solche Unterbrechung dauert beispielsweise weniger als etwa 5 sec, bevorzugt weniger als etwa 1 sec, besonders bevorzugt weniger als etwa 0,5 sec. Die im Notakku 250 gespeicherte Energie reicht beispielsweise zum Überwinden einer Stufe, insbesondere nur einer Stufe. Es kann zweckmäßig sein, dass die im Notakku 250 gespeicherte Energie ausreicht, insbesondere nur ausreicht, um die Treppensteigeinheit 200 in einen sicheren Zustand zu versetzen, insbesondere sodass die Treppensteigeinheit 200 sicher steht.

Bevorzugt ist die Treppensteigeinheit 200, insbesondere die Aufnahmevorrichtung 205 etwa symmetrisch, insbesondere spiegelsymmetrisch ausgebildet.

Zweckmäßig umfasst die Treppensteigeinheit 200 eine in Fig. 3 gezeigte Erkennungsvorrichtung 255. Der Bodenroboter 100 erkennt anhand der Erkennungsvorrichtung 255 die Treppensteigeinheit 200. Der Bodenroboter 100 nutzt hierzu beispielsweise einen oder mehrere der Sensoren 145.

In einem in den Figuren nicht gezeigten Ausführungsbeispiel umfasst die Treppensteigeinheit 200, insbesondere die Aufnahmevorrichtung 205, eine Aussparung. Durch die Aussparung kann für den Bodenroboter 100 ein optischer Zugang zur Bodenfläche hergestellt werden. Der Bodenroboter 100 kann, insbesondere mit einem an der Unterseite des Bodenroboters 100 angeordneten Sensor, beispielsweise einem Cliff-Sensor, die Bodenfläche sensieren.

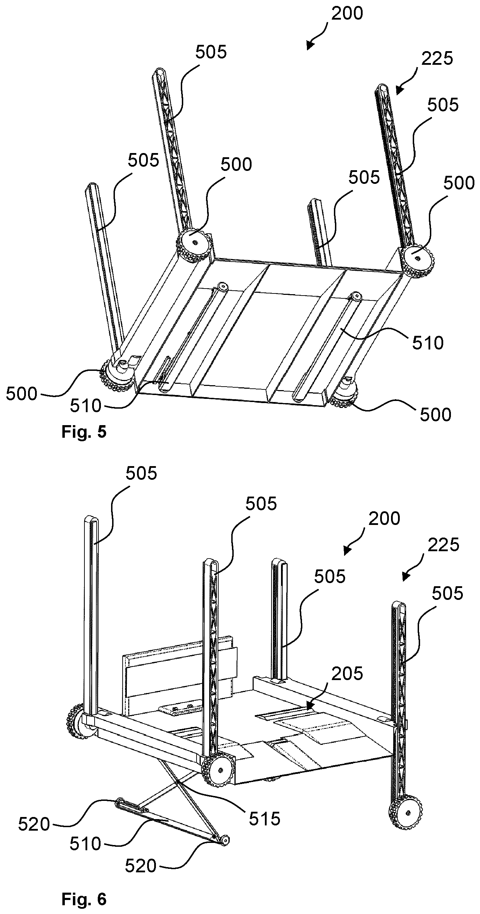

Anhand der Figuren 5 und 6 soll die Treppensteigvorrichtung 225 beschrieben werden. Die in diesem Ausführungsbeispiel beschriebene Treppensteigvorrichtung 225 soll insbesondere eine beispielhafte Ausführung darstellen. Weitere Ausführungsbeispiele einer Treppensteigvorrichtung 225 sind in weiteren Ausführungsbeispielen denkbar.

Die Treppensteigvorrichtung 225 umfasst im Ausführungsbeispiel vier Laufräder 500. Im Ausführungsbeispiel ist jedes der Laufräder 500 angetrieben, insbesondere vom Aktor 220 angetrieben. Jedes Laufrad 500 kann einzeln angesteuert und damit die Treppensteigeinheit 200 besonders gut und einfach manövriert werden. In einem weiteren Ausführungsbeispiel kann nur eines, oder nur einzelne der Laufräder 500 angetrieben sein. Die Laufräder 500 sind bevorzugt an den Außenbereichen, insbesondere an den Ecken, der Treppensteigeinheit 200 angeordnet. Jedes der Laufräder 500 ist an einem höhenverstellbaren Steigelement 505 drehbar befestigt. Das höhenverstellbare Steigelement 505 ist höhenverstellbar, insbesondere höhenverstellbar relativ zur Aufnahmevorrichtung 205. In Fig. 6 ist dargestellt, dass zwei, in Fig. 6 die zwei rechts liegenden Steigelemente 505, in der Höhe anders eingestellt sind als die zwei anderen, in Fig. 6 die zwei links liegenden Steigelemente 505. Die Höhenverstellung ist bevorzugt so ausgelegt, dass die Laufräder 500, in Fig. 6 die linken und rechten Laufräder 500, einen Höhenunterschied von einer, bevorzugt von zwei Stufenhöhen erreichen können. Die höhenverstellbaren Steigelemente 505 sind bevorzugt über den Aktor 220, bevorzugt einzeln und/oder in Gruppen, ansteuerbar.

Die Treppensteigvorrichtung 225 umfasst eine, im Ausführungsbeispiel zwei, Abstützvorrichtung 510. In Fig. 5 ist die Abstützvorrichtung 510 in einer eingefahrenen Position, in Fig. 6 ist eine der beiden, insbesondere die linke, Abstützvorrichtung, 510 in einer ausgefahrenen Position und die andere der beiden, insbesondere die rechte, Abstützvorrichtung 510 in einer eingefahrenen Position, und daher insbesondere in Fig. 6 nicht sichtbar, dargestellt. Die Abstützvorrichtung 510 dient im Wesentlichen dazu, die Treppensteigeinheit 200 beim Überwinden einer Treppe zu stabilisieren bzw. abzustützen. Weiter unten wird genau beschrieben, wie die Abstützvorrichtung 510 beim Treppenüberwinden unterstützt.

Im Ausführungsbeispiel ist vorgesehen, dass die Abstützvorrichtung 510 vom Aktor 220 angesteuert ist. Der Aktor 220 kann die Abstützvorrichtung 510 insbesondere ein- oder ausfahren. Im Ausführungsbeispiel klappt die Abstützvorrichtung 510 über einen Scherenmechanismus 515 aus. Optional umfasst die Abstützvorrichtung 510 ein, im Ausführungsbeispiel zwei, Räder 520. Die Räder 520 sollen im Wesentlichen ein Nachlaufen ermöglichen. Es kann vorteilhaft sein, insbesondere beispielsweise aus Stabilitätsgründen, wenn keine Räder 520 vorgesehen sind.

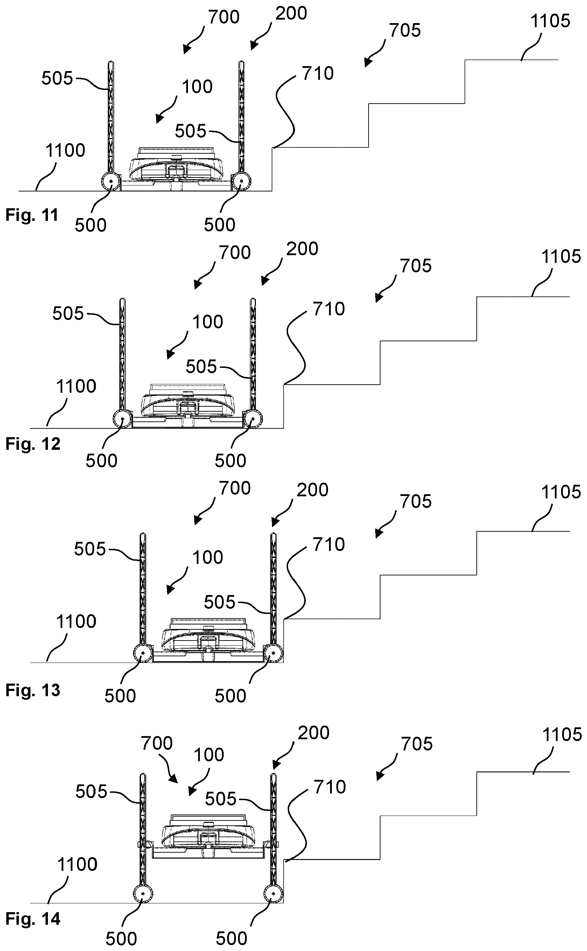

Die Fig. 7 bis 32 zeigen ein Reinigungssystem 700 zur Reinigung von zwei über eine Treppe 705 verbundenen Bodenflächen 1100, 1105 (vgl. auch Fig. 11). Das Reinigungssystem 700 umfasst die Treppensteigeinheit 200 und den Bodenroboter 100.

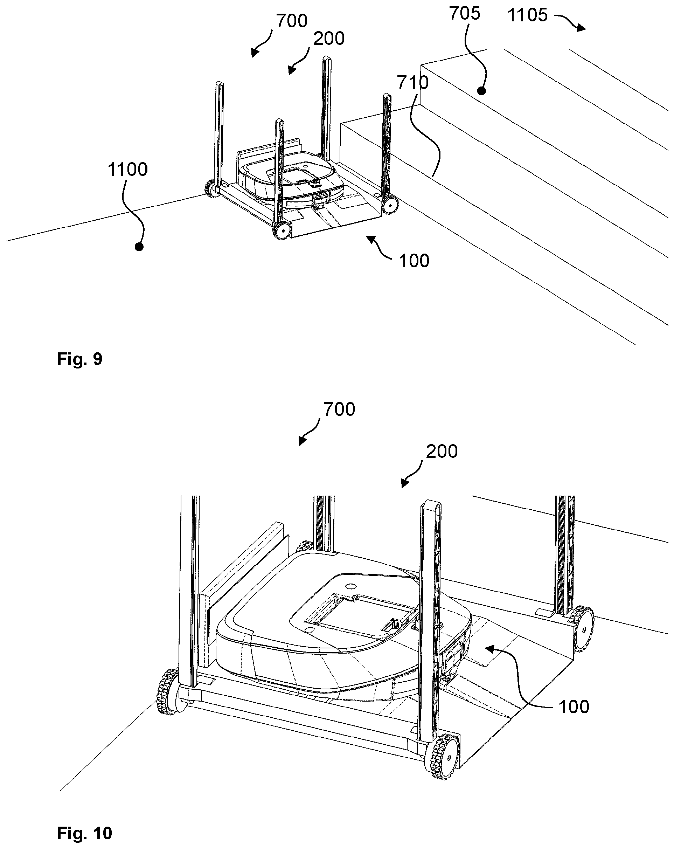

Fig. 7 zeigt das Reinigungssystem 700 im ungekoppelten Zustand, Fig. 9 und 10 zeigen das Reinigungssystem im gekoppelten Zustand, in welchem der Bodenroboter 100 mit der Treppensteigeinheit 200 gekoppelt ist. Im gekoppelten Zustand steuert der Bodenroboter 100 den Aktor 220 der Treppensteigvorrichtung 225 der Treppensteigeinheit 200 an und/oder versorgt diesen mit elektrischer Energie. Dadurch kann die Treppensteigeinheit 200 mit dem Bodenroboter 100 die Treppe 705 überwinden. Der Bodenroboter 100 kann die Treppensteigeinheit 200 auch auf einer der Bodenflächen 1100, 1105 steuern. Beispielsweise kann der Bodenroboter 100 mit der Treppensteigeinheit 200 von einer Treppe zu einer anderen Treppe fahren. Bevorzugt nutzt der Bodenroboter 100 zur Steuerung der Treppensteigeinheit 200 die Sensoren 145, insbesondere nur die Sensoren 145. Die Treppensteigeinheit 200 kann in diesem, beispielhaften Ausführungsbeispiel, ohne Sensoren auskommen.

Der Bodenroboter 100, insbesondere nach dem Koppeln mit der Treppensteigeinheit 200, erkennt, insbesondere selbsttätig, dass neue Funktionen, wie beispielsweise Treppensteigen zur Verfügung stehen. Es kann zweckmäßig sein, dass ein Benutzer, beispielsweise über eine mit dem Bodenroboter 100 kommunizierbare App, dem Bodenroboter 100 mitteilt, dass eine Treppensteigeinheit 200 vorhanden und nutzbar ist. In einem weiteren Ausführungsbeispiel kann der Bodenroboter 100 bei einer Reinigungsroutine das Vorhandensein der Treppensteigeinheit 200 selbst erkennen, beispielsweise durch ein Erfassen der Erkennungsvorrichtung 255 mittels der Sensoren 145. Der Bodenroboter 100 kann daraus schließen, dass eine Treppe 705 überwunden werden kann. Bevorzugt lernt der Bodenroboter 100 selbsttätig, mit der Treppensteigeinheit 200 eine Treppe 705 zu überwinden.

Will der Bodenroboter 100 einen Stockwerkswechsel durchführen, so lokalisiert er beispielsweise zuerst die neben der Treppe 705 stationierte Treppensteigeinheit 200. Anschließend führt er ein Docking-Manöver an der Treppensteigeinheit 200 durch, bei der er sich beispielsweise der Rampe 215 nähert. Der Bodenroboter 100 befährt die Rampe 215. Der Bodenroboter 100 fährt langsam weiter, bis er Kontakt zu Versorgungsschnittstelle 230 hergestellt hat. Der Bodenroboter 100 hat somit eine, insbesondere seine, Halteposition erreicht. In der Halteposition sitzen die Antriebsräder 120 und/oder das Stützrad 125 des Bodenroboters 100 in der beispielhaft als Vertiefungen ausgeführten Fixiervorrichtung 210. Dadurch wird verhindert, dass der Bodenroboter 100 auf der Treppensteigeinheit 200 verrutschen kann. In einem weiteren Ausführungsbeispiel kann die Treppensteigeinheit 200 den Bodenroboter 100 kurz vor dem Start des Treppensteigmanövers durch zusätzliche Haltemechanismen, etwa seitliche Fixierungen oder Klammerungen, an der Treppensteigeinheit 200 festmachen. Ist der Bodenroboter 100 in der Halteposition angekommen und der Kontakt zur Treppensteigeinheit 200 hergestellt, sowie eine Kommunikation etabliert, kann der Bodenroboter 100 den Startbefehl zum Besteigen der Treppen geben.

Am anderen Ende der Treppe 705 angekommen, kann die Treppensteigeinheit 200 dem Bodenroboter 100 das vollständige, sichere Aufsitzen auf der Bodenfläche 1100, 1105 melden. In einem weiteren Ausführungsbeispiel kann der Bodenroboter 100 das auch selbst erkennen, insbesondere durch seine Sensorik 145. Der Bodenroboter 100 verlässt die Treppensteigeinheit 200 über die Rampe 215. Der Bodenroboter 100 führt anschließend eine Aufgabe im aktuellen Stockwerk, beispielsweise eine Reinigung der Bodenfläche 1100, 1105, aus. Die Treppensteigeinheit 200 stellt im neu erreichten Stockwerk einen Fixpunkt für den Bodenroboter 100 dar, wie es in anderen Etagen eine Lade- bzw. Basisstation tun würde. Zum Zurückkehren in die vorherige Etage nähert sicher der Bodenroboter 100 der Treppensteigeinheit 200 erneut, und dockt wieder an dieser an, um den Transportvorgang zu starten.

Besonders bevorzugt erfolgt das Überwinden der Treppe 705 möglichst ruckfrei und/oder mit etwa horizontaler Ausrichtung des auf der Treppensteigeinheit 200 aufgenommenen Bodenroboters 100. Zweckmäßig nutzt der Bodenroboter 100 seine Navigationssensorik, um zu prüfen, ob weitere Treppenstufen überwunden werden müssen und/oder um ein Erreichen im Zielstockwerk auf Basis der Wiedererkennung seiner Position in dessen Kartendaten zu bestimmen.

Um mehr als zwei benachbarte Stockwerke zu erreichen, kann entweder an jeder Treppe 705 eine Treppensteigeinheit 200 positioniert werden und/oder die Treppensteigeinheit 200 wechselt unter Nutzung ihres Aktors 220 innerhalb einer Etage ihre Position so, dass auch eine andere Treppe 705 zu einem weiteren Stockwerk bestiegen werden kann. Dabei wird der Aktor 220 vom Bodenroboter 100 angesteuert. Die Treppensteigeinheit 200 kann also insbesondere nur verfahren, wenn der Bodenroboter 100 mit der Treppensteigeinheit 200 gekoppelt ist. Eine Navigation zum neuen Startort an der nächsten Treppe 705 kann über die Messwerte des Navigationssensors des angedockten Bodenroboters 100 erfolgen.

Im Nachfolgenden soll ein beispielhaftes Verfahren zum Überwinden der Treppe 705 anhand der Fig. 7 bis 32 erklärt werden. Hierbei wird ein Steigen, insbesondere ein Aufsteigen, der Treppe 705 beschrieben. Selbsterklärend kann auch vorgesehen sein, dass das Reinigungssystem 700 die Treppe 705 absteigen kann.

In einem ersten in Fig. 7 gezeigten Verfahrensschritt reinigt der Bodenroboter 100 die erste Bodenfläche 1100 bzw. beendet das Reinigen der ersten Bodenfläche 1100. Im nächsten in Fig. 8 dargestellten Verfahrensschritt navigiert der Bodenroboter 100 insbesondere autonom zur Treppensteigeinheit 200. Bevorzugt navigiert der Bodenroboter 100 beim Einfahren mindestens zweitweise etwa parallel zu einer Trittkante 710 einer Treppenstufe, insbesondere der ersten Treppenstufe der Treppe 705. Die Auffahrkante 715 der Rampe 215 verläuft bevorzugt etwa orthogonal zu der Trittkante 710.

Der Bodenroboter 100 erkennt hierbei die Treppensteigeinheit 200 als Treppensteigeinheit 200. Im nächsten in Fig. 9 gezeigten Verfahrensschritt fährt der Bodenroboter 100 bevorzugt über die Rampe 215 auf die Aufnahmevorrichtung 205. Der Bodenroboter 100 nimmt die in Fig. 10 gezeigte Halteposition, insbesondere mit den Antriebsrädern 120 in den Vertiefungen 210, ein. Damit ist der Bodenroboter 100 auf der Aufnahmevorrichtung 205 der Treppensteigeinheit 200 aufgenommen. Beim in Fig. 10 gezeigten Verfahrensschritt koppelt die Koppelvorrichtung 160 des Bodenroboters 100 mit der Versorgungsschnittstelle 230 der Treppensteigeinheit 200. Dadurch ist eine Stromund/oder Kommunikationsversorgung zwischen Bodenroboter 100 und Treppensteigeinheit 200 hergestellt. Der Bodenroboter 100 ist damit mit dem Aktor 220 wirkverbunden und kann diesen insbesondere ansteuern.

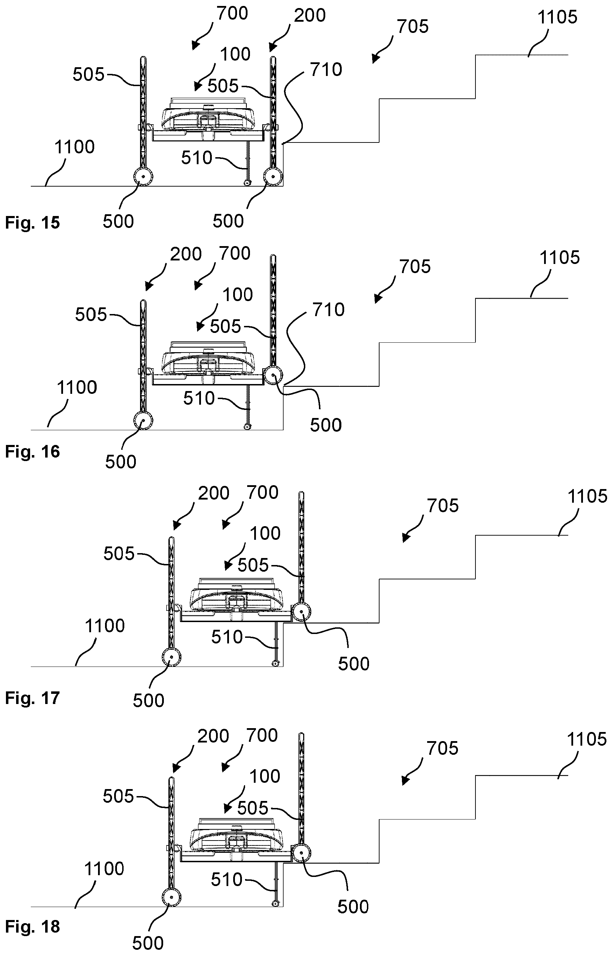

Nachfolgend soll anhand der Fig. 11 bis 30 ein weiteres Ausführungsbeispiel erklärt werden, wie die Treppensteigeinheit 200, angesteuert vom Bodenroboter 100, die Treppe 705 überwindet. Im in Fig. 11 gezeigten Verfahrensschritt ist der Bodenroboter 100 mit der Treppensteigeinheit 200 im gekoppelten Zustand. Im in Fig. 12 gezeigten Verfahrensschritt hebt die Aufnahmevorrichtung 205 leicht von der Bodenfläche 1100 ab, beispielsweise indem alle vier Steigelemente 505 die Aufnahmevorrichtung 205 anheben. Dadurch ist das Reinigungssystem 700 fahrbar und wird vom Bodenroboter 100 gesteuert zur Treppe 705 gefahren, vgl. Fig. 13. Im in Fig. 14 gezeigten Verfahrensschritt heben alle vier Steigelemente 505 die Aufnahmevorrichtung 205 an, insbesondere in etwa so hoch, dass die Unterseite der Aufnahmevorrichtung 205 etwas oberhalb der ersten Treppenstufe liegt. Im in Fig. 15 gezeigten Verfahrensschritt fährt die Abstützvorrichtung 510 aus. Die Abstützvorrichtung 510 stützt sich auf der Bodenfläche 1100 ab. Im nächsten in Fig. 16 gezeigten Verfahrensschritt heben zwei der vier Steigelemente 505, nämlich die der Treppe 705 nahegelegenen Steigelemente 505, die rechten Laufräder 500 an, insbesondere auf eine Höhe, in der die rechten Laufräder 500 oberhalb der Treppenstufe angeordnet sind.

Im nächsten in Fig. 17 und 18 gezeigten Verfahrensschritten bewegt sich das Reinigungssystem 700 horizontal, vgl. Fig. 17, insbesondere so weit, bis die bereits zuvor angehobenen Laufräder 500 auf der Treppenstufe aufliegen und sich dort abstützen können, vgl. Fig. 18.

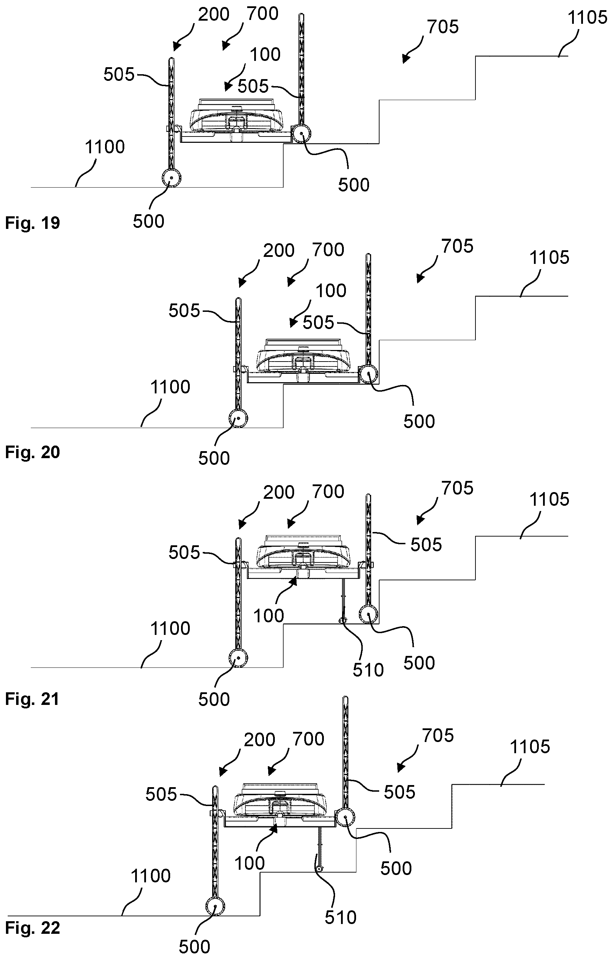

Im in Fig. 19 gezeigten Verfahrensschritt klappt die Abstützvorrichtung 510 ein. Im nächsten in Fig. 20 gezeigten Verfahrensschritt bewegt sich das Reinigungssystem 700 horizontal, insbesondere so weit, bis die unteren Laufräder 500 und/oder die oberen Laufräder 500 an der, insbesondere an einer der, Treppenstufe anliegen. Im Ausführungsbeispiel liegen die oberen Laufräder 500, also in Fig. 20 die rechten Laufräder, an der nächsten Treppenstufe an. Je nach Treppenstufengeometrie können aber auch die linken Laufräder an der ersten Stufe anliegen.

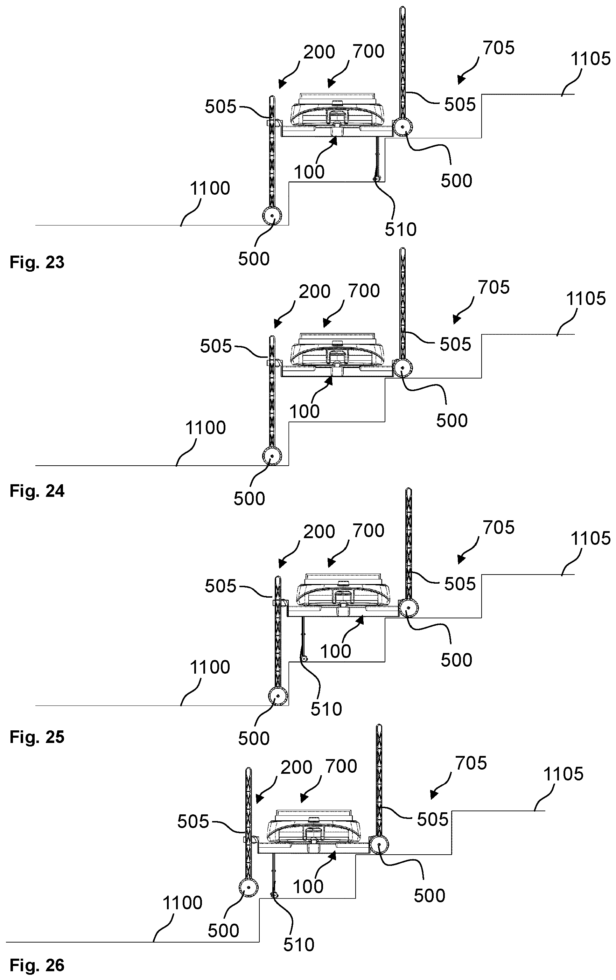

Im in Fig. 21 gezeigten Verfahrensschritt heben die Steigelemente 505 die Aufnahmevorrichtung 205 an, insbesondere so weit, bis die Unterseite der Aufnahmevorrichtung 205 auf Höhe der nächsten Stufentrittfläche liegt. In diesem Verfahrensschritt fährt die Abstützvorrichtung 510 aus. Im in Fig. 22 gezeigten Verfahrensschritt heben die rechten Steigelemente 505 die rechten Laufräder 500 an, insbesondere so weit, dass die Laufräder 500 auf Höhe der Stufentrittfläche der nächsten Stufe sind. Im in Fig. 23 gezeigten Verfahrensschritt verfährt das Reinigungssystem 700 horizontal, insbesondere so weit, bis die rechten Laufräder 500 auf der Stufentrittfläche aufliegen könnten.

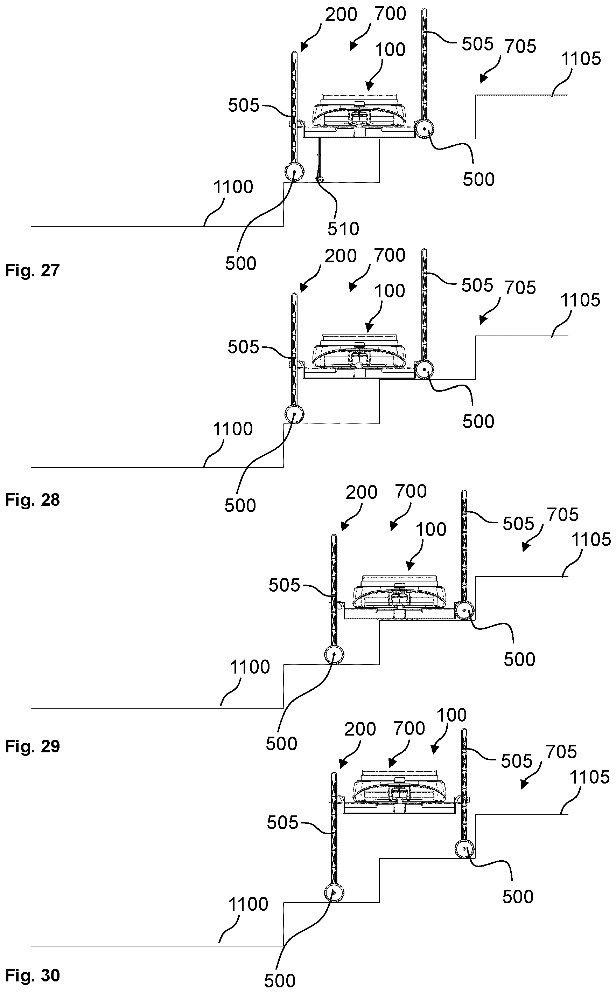

Im in Fig. 24 gezeigten Verfahrensschritt klappt die Abstützvorrichtung 510 ein und das Reinigungssystem 700 verfährt horizontal, im Ausführungsbeispiel so weit, bis die linken Laufräder 500 am der Treppenstufe anliegen. Im in Fig. 25 gezeigten Verfahrensschritt klappt die linke Abstützvorrichtung 510 aus. Im in Fig. 26 gezeigten Verfahrensschritt hebt das linke Steigelement 505 das linke Laufrad 500 an, insbesondere so hoch, bis dieses oberhalb der Trittstufe ist. Im in Fig. 27 gezeigten Verfahrensschritt verfährt das Reinigungssystem 700 horizontal, mindestens so weit, bis das linke Laufrad vollständig oberhalb der Trittstufe ist. Im in Fig. 28 gezeigten Verfahrensschritt fährt die linke Abstützvorrichtung 510 ein. Im in Fig. 29 gezeigten Verfahrensschritt verfährt das Reinigungssystem 700 horizontal, insbesondere so weit, bis das rechte Laufrad 500 an der nächsten Treppenstufe anliegt. Im in Fig. 30 angedeuteten Verfahrensschritt wiederholen sich die bereits beschriebenen Verfahrensschritte so lange, bis die oberste Stufe der Treppe 705 erreicht ist.

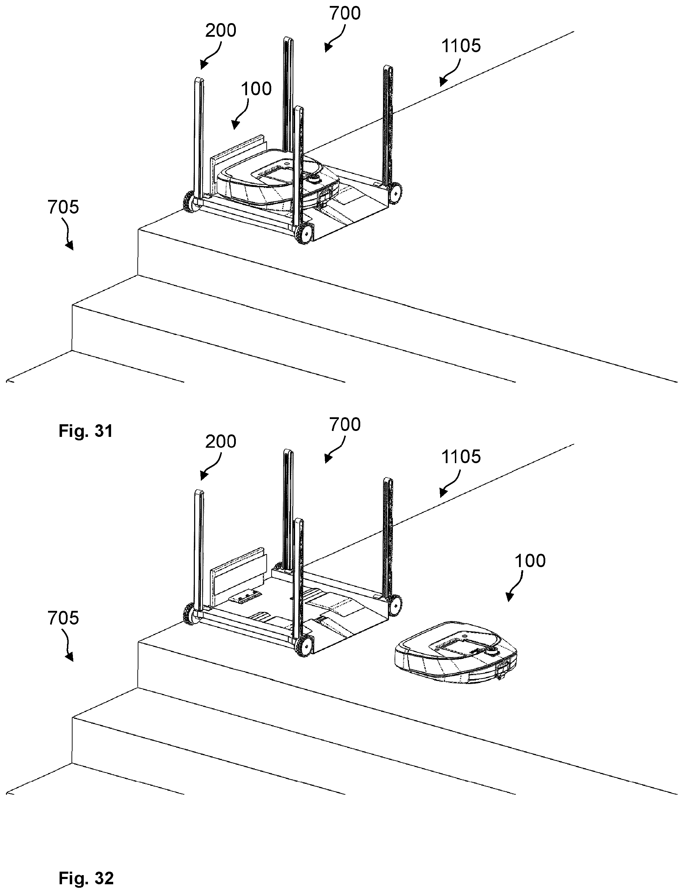

Im in Fig. 31 gezeigten Verfahrensschritt verfährt das Reinigungssystem 700 bevorzugt so weit, bis ein gewisser Abstand von der oberen Trittkante der oberen Stufe bzw. der oberen Bodenfläche 1105 erreicht ist. Unter "gewisser" Abstand kann beispielsweise verstanden werden, dass der Abstand so groß ist, dass der Bodenroboter 100 problemlos, auch unter gewissen Steuerungenauigkeiten, von der Treppensteigeinheit 200 abfahren und/oder auf die Treppensteigeinheit auffahren kann. Im in Fig. 31 gezeigten Verfahrensschritt koppelt der Bodenroboter 100 von der Treppensteigeinheit 200 ab, insbesondere wird die Koppelvorrichtung 160 von der Versorgungsschnittstelle 230 entkoppelt. Im in Fig. 32 gezeigten Verfahrensschritt fährt der Bodenroboter 100 von der Treppensteigeinheit 200 ab. Im Ausführungsbeispiel fährt der Bodenroboter 100 beim Ausfahren aus der Aufnahmevorrichtung 205 mindestens zweitweise etwa parallel zu der Trittkante einer Stufe der Treppe 705, im Ausführungsbeispiel parallel zur Trittkante der oberen Bodenfläche 1105.

### Bezugszeichen

- 100: Bodenroboter
- 110: Reinigungsvorrichtung
- 120: Antriebsrad
- 125: Stützrad
- 130: Saugmund
- 135: Walze
- 145: Sensor
- 150: Steuergerät
- 155: Energiespeicher
- 160: Koppelvorrichtung
- 165: Ladekontakt
- 170: Kommunikationskontakt

- 200: Treppensteigeinheit
- 205: Aufnahmevorrichtung
- 210: Fixiervorrichtung
- 215: Rampe
- 220: Aktor
- 225: Treppensteigvorrichtung
- 230: Versorgungsschnittstelle
- 235: Sensorik
- 240: elektrischer Kontakt
- 245: Kommunikationsschnittstelle
- 250: Notakku
- 255: Erkennungsvorrichtung

- 500: Laufrad
- 505: Steigelement
- 510: Abstützvorrichtung
- 515: Scherenmechanismus
- 520: Rad
- 700: Reinigungssystem
- 705: Treppe
- 710: Trittkante
- 715: Auffahrkante

- 1100: Bodenfläche
- 1105: Bodenfläche

## Patentansprüche

1. Treppensteigeinheit (200) für einen Bodenroboter (100), wobei die Treppensteigeinheit (200) folgendes umfasst:
- eine Aufnahmevorrichtung (205) zur Aufnahme des Bodenroboters (100);
- eine von einem Aktor (220) bewegbare Treppensteigvorrichtung (225), mit welcher die Treppensteigeinheit (200) eine Treppe (705) überwinden kann;
**dadurch gekennzeichnet, dass** die Treppensteigeinheit weiterhin umfasst:
- eine mit dem Aktor (220) wirkverbundene Versorgungsschnittstelle (230);
- wobei die Versorgungsschnittstelle (230) mit dem Bodenroboter (100) koppelbar ist, so dass der Aktor (220) vom Bodenroboter (100) versorgbar ist.

2. Treppensteigeinheit (200) nach Anspruch 1, wobei die Versorgungsschnittstelle (230) einen elektrischen Kontakt (240) umfasst, so dass der Aktor (220) vom Bodenroboter (100) über den elektrischen Kontakt (240) mit elektrischer Energie versorgbar ist.

3. Treppensteigeinheit (200) nach Anspruch 2, wobei der elektrische Kontakt (240) gefedert gelagert ist.

4. Treppensteigeinheit (200) nach einem der vorangehenden Ansprüche, wobei die Versorgungsschnittstelle (230) eine Kommunikationsschnittstelle (245) umfasst, so dass der Aktor (220) vom Bodenroboter (100) über die Kommunikationsschnittstelle (245) ansteuerbar ist.

5. Treppensteigeinheit (200) nach Anspruch 4, wobei die Kommunikationsschnittstelle (245) als elektrischer Kontakt und/oder drahtlos ausgebildet ist.

6. Treppensteigeinheit (200) nach einem der vorangehenden Ansprüche, wobei die Treppensteigeinheit (200) einen Notakku (250) umfasst.

7. Treppensteigeinheit (200) nach einem der vorangehenden Ansprüche, wobei die Aufnahmevorrichtung (205) eine Fixiervorrichtung (210) zur Fixierung des Bodenroboters (100) umfasst.

8. Treppensteigeinheit (200) nach einem der vorangehenden Ansprüche, wobei die Treppensteigeinheit (200) symmetrisch ist.

9. Treppensteigeinheit (200) nach einem der vorangehenden Ansprüche, wobei die Treppensteigeinheit (200) eine Erkennungsvorrichtung (255) umfasst.

10. Treppensteigeinheit (200) nach einem der vorangehenden Ansprüche, wobei die Aufnahmevorrichtung (205) eine Aussparung umfasst, durch welche der auf der Aufnahmevorrichtung (205) aufgenommene Bodenroboter (100) einen, insbesondere optischen, Zugang zu einer Bodenfläche (1100, 1105) erhält.

11. Bodenroboter (100) zur Reinigung einer Bodenfläche (1100, 1105), wobei der Bodenroboter (100) folgendes umfasst:
- ein Steuergerät (150) zum Steuern des Bodenroboters (100);
- einen Energiespeicher (155) zum Speichern von elektrischer Energie;
**dadurch gekennzeichnet, dass** der Bodenroboter weiterhin umfasst:
- eine Koppelvorrichtung (160), wobei die Koppelvorrichtung (160) mit einer Versorgungsschnittstelle (230) einer Treppensteigeinheit (200), insbesondere nach einem der Ansprüche 1 bis 10, koppelbar ist;
- wobei bei Kopplung der Koppelvorrichtung (160) mit der Versorgungsschnittstelle (230) ein Aktor (220) der Treppensteigeinheit (200) vom Steuergerät (150) ansteuerbar ist und/oder mit elektrischer Energie aus dem Energiespeicher (155) versorgbar ist.

12. Reinigungssystem zur Reinigung von zwei über eine Treppe verbundenen Bodenflächen (1100, 1105), wobei das Reinigungssystem (700) folgendes umfasst:
- eine Treppensteigeinheit (200) nach einem der Ansprüche 1 bis 10;
- einen Bodenroboter (100) nach Anspruch 11;
- wobei in einem gekoppelten Zustand der Bodenroboter (100) auf der Aufnahmevorrichtung (205) aufgenommen ist und die Koppelvorrichtung (160) des Bodenroboters (100) mit der Versorgungsschnittstelle (230) der Treppensteigeinheit (200) gekoppelt ist;
- sodass im gekoppelten Zustand der Bodenroboter (100) den Aktor (220) der Treppensteigvorrichtung (225) der Treppensteigeinheit (200) ansteuert und/oder mit elektrischer Energie versorgt, wodurch die Treppensteigeinheit (200) mit dem Bodenroboter (100) die Treppe (705) überwindet.

13. Verfahren zur Reinigung von zwei über eine Treppe (705) verbundenen Bodenflächen (1100, 1105) mit einem Reinigungssystem (700) nach Anspruch 12, umfassend die folgenden Verfahrensschritte:
- Aufnehmen des Bodenroboters (100) auf der Aufnahmevorrichtung (205) der Treppensteigeinheit (200);
- Kopplung der Koppelvorrichtung (160) des Bodenroboters (100) mit der Versorgungsschnittstelle (230) der Treppensteigeinheit (200);
- Steuerung des Aktors (220) der Treppensteigeinheit (200) mit dem Steuergerät (150) des Bodenroboters (100) und/oder Versorgung des Aktors (220) der Treppensteigeinheit (200) mit Energie aus dem Energiespeicher (155) des Bodenroboters (100);
- sodass die Treppensteigvorrichtung (225) bewegt wird, und die Treppensteigeinheit (200) mit dem Bodenroboter (100) die Treppe (705) überwindet.

14. Verfahren nach Anspruch 13, wobei der Bodenroboter (100) beim Einfahren auf die Aufnahmevorrichtung (205) mindestens zeitweise etwa parallel zu einer Trittkante (710) einer Stufe der Treppe (705) fährt und/oder wobei der Bodenroboter (100) beim Ausfahren aus der Aufnahmevorrichtung (205) mindestens zeitweise etwa parallel zu einer Trittkante (710) einer Stufe der Treppe (705) fährt.

15. Verfahren nach Anspruch 13 oder 14, wobei Signale eines Sensors (145) des Bodenroboters (100) zur Steuerung des Aktors (220) der Treppensteigeinheit (200) durch das Steuergerät (150) des Bodenroboters (100) verwendet werden.

## Claims

1. Stair climbing unit (200) for a floor robot (100), wherein the stair climbing unit (200) comprises the following:
- a receiving apparatus (205) for receiving the floor robot (100);
- a stair climbing apparatus (225) which can be moved by an actuator (220), with which stair climbing apparatus the stair climbing unit (200) can ascend a flight of stairs (705);
**characterised in that** the stair climbing unit furthermore comprises:
- a supply interface (230) which is actively connected to the actuator (220);
- wherein the supply interface (230) can be coupled to the floor robot (100), so that the actuator (220) can be supplied by the floor robot (100).

2. Stair climbing unit (200) according to claim 1, wherein the supply interface (230) comprises an electrical contact (240), so that the actuator (220) can be supplied with electrical energy by the floor robot (100) via the electrical contact (240).

3. Stair climbing unit (200) according to claim 2, wherein the electrical contact (240) is spring-loaded.

4. Stair climbing unit (200) according to one of the preceding claims, wherein the supply interface (230) comprises a communication interface (245), so that the actuator (220) can be actuated by the floor robot (100) via the communication interface (245).

5. Stair climbing unit (200) according to claim 4, wherein the communication interface (245) is embodied as an electrical contact and/or is embodied wirelessly.

6. Stair climbing unit (200) according to one of the preceding claims, wherein the stair climbing unit (200) comprises a backup battery (250).

7. Stair climbing unit (200) according to one of the preceding claims, wherein the receiving apparatus (205) comprises a fixing apparatus (210) for fixing the floor robot (100).

8. Stair climbing unit (200) according to one of the preceding claims, wherein the stair climbing unit (200) is symmetrical.

9. Stair climbing unit (200) according to one of the preceding claims, wherein the stair climbing unit (200) comprises a detection apparatus (255).

10. Stair climbing unit (200) according to one of the preceding claims, wherein the receiving apparatus (205) comprises a recess, through which the floor robot (100) received by the receiving apparatus (205) obtains access, in particular optical access, to a floor surface (1100, 1105).

11. Floor robot (100) for cleaning a floor surface (1100, 1105), wherein the floor robot (100) comprises the following:
- a control device (150) for controlling the floor robot (100);
- an energy store (155) for storing electrical energy;
**characterised in that** the floor robot furthermore comprises:
- a coupling apparatus (160), wherein the coupling apparatus (160) can be coupled to a supply interface (230) of a stair climbing unit (200), in particular according to one of claims 1 to 10;
- wherein, when the coupling apparatus (160) is coupled to the supply interface (230), an actuator (220) of the stair climbing unit (200) can be actuated by the control device (150) and/or can be supplied with electrical energy from the energy store (155).

12. Cleaning system for cleaning two floor surfaces (1100, 1105) connected by a flight of stairs, wherein the cleaning system (700) comprises the following:
- a stair climbing unit (200) according to one of claims 1 to 10;
- a floor robot (100) according to claim 11;
- wherein, in a coupled state, the floor robot (100) is received on the receiving apparatus (205) and the coupling apparatus (160) of the floor robot (100) is coupled to the supply interface (230) of the stair climbing unit (200);
- so that, in the coupled state, the floor robot (100) actuates the actuator (220) of the stair climbing apparatus (225) of the stair climbing unit (200) and/or supplies it with electrical energy, through which means the stair climbing unit (200) with the floor robot (100) ascends the stairs (705).

13. Method for cleaning two floor surfaces (1100, 1105) connected by a flight of stairs (705), with a cleaning system (700) according to claim 12, comprising the following method steps:
- receiving the floor robot (100) on the receiving apparatus (205) of the stair climbing unit (200);
- coupling the coupling apparatus (160) of the floor robot (100) to the supply interface (230) of the stair climbing unit (200);
- controlling the actuator (220) of the stair climbing unit (200) with the control device (150) of the floor robot (100) and/or supplying the actuator (220) of the stair climbing unit (200) with energy from the energy store (155) of the floor robot (100);
- so that the stair climbing apparatus (255) is moved, and the stair climbing unit (200) with the floor robot (100) ascends the stairs (705).

14. Method according to claim 13, wherein, when entering onto the receiving apparatus (205), the floor robot (100) travels at least temporarily approximately parallel to a tread edge (710) of a step of the stairs (705) and/or wherein, when exiting from the receiving apparatus (205), the floor robot (100) travels at least temporarily approximately parallel to a tread edge (710) of a step of the stairs (705).

15. Method according to claim 13 or 14, wherein signals of a sensor (145) of the floor robot (100) are used for controlling the actuator (220) of the stair climbing unit (200) by way of the control device (150) of the floor robot (100).

## Revendications

1. Unité de montée d'escaliers (200) pour un robot de sol (100), dans laquelle l'unité de montée d'escaliers (200) comprend les éléments suivants :
- un dispositif d'accueil (205) pour l'accueil du robot de sol (100) ;
- un dispositif de montée d'escaliers (225) pouvant être déplacé par un actionneur (220), avec lequel l'unité de montée d'escaliers (200) peut franchir un escalier (705) ; **caractérisée en ce que** l'unité de montée d'escaliers comprend en outre :
- une interface d'alimentation (230) reliée fonctionnellement à l'actionneur (220) ;
- dans laquelle l'interface d'alimentation (230) peut être couplée au robot de sol (100), de sorte quel le robot de sol (100) puisse alimenter l'actionneur (220).

2. Unité de montée d'escaliers (200) selon la revendication 1, dans laquelle l'interface d'alimentation (230) comprend un contact électrique (240), de sorte que le robot de sol (100) puisse alimenter l'actionneur (220) en énergie électrique via le contact électrique (240).

3. Unité de montée d'escaliers (200) selon la revendication 2, dans laquelle le contact électrique (240) est logé sur ressorts.

4. Unité de montée d'escaliers (200) selon l'une des revendications précédentes, dans laquelle l'interface d'alimentation (230) comprend une interface de communication (245), de sorte que le robot de sol (100) puisse commander l'actionneur (220) via l'interface de communication (245).

5. Unité de montée d'escaliers (200) selon la revendication 4, dans laquelle l'interface de communication (245) est formée sous la forme d'un contact électrique et/ou sans fil.

6. Unité de montée d'escaliers (200) selon l'une des revendications précédentes, dans laquelle l'unité de montée d'escaliers (200) comprend une batterie de secours (250).

7. Unité de montée d'escaliers (200) selon l'une des revendications précédentes, dans laquelle le dispositif d'accueil (205) comprend un dispositif de fixation (210) pour la fixation du robot de sol (100).

8. Unité de montée d'escaliers (200) selon l'une des revendications précédentes, dans laquelle l'unité de montée d'escaliers (200) est symétrique.

9. Unité de montée d'escaliers (200) selon l'une des revendications précédentes, dans laquelle l'unité de montée d'escaliers (200) comprend un dispositif de détection (255).

10. Unité de montée d'escaliers (200) selon l'une des revendications précédentes, dans laquelle le dispositif d'accueil (205) comprend un évidement à travers lequel le robot de sol (100) accueilli sur le dispositif d'accueil (205) dispose d'un accès, en particulier optique, à une surface de sol (1100, 1105).

11. Robot de sol (100) pour le nettoyage d'une surface de sol (1100, 1105), dans lequel le robot de sol (100) comprend les éléments suivants :
- un appareil de commande (150) pour la commande du robot de sol (100) ;
- un accumulateur d'énergie (155) pour l'accumulation d'énergie électrique ;
**caractérisé en ce que** le robot de sol comprend en outre :
- un dispositif de couplage (160), dans lequel le dispositif de couplage (160) peut être couplé à une interface d'alimentation (230) d'une unité de montée d'escaliers (200), en particulier selon l'une des revendications 1 à 10 ;
- dans lequel lorsque le dispositif de couplage (160) est couplé à l'interface d'alimentation (230), un actionneur (220) de l'unité de montée d'escaliers (200) peut être commandé par l'appareil de commande (150) et/ou alimenté en énergie électrique à partir de l'accumulateur d'énergie (155).

12. Système de nettoyage pour le nettoyage de deux surfaces de sol (1100, 1105) reliées par un escalier, dans lequel le système de nettoyage (700) comprenant les éléments suivants :
- une unité de montée d'escaliers (200) selon l'une des revendications 1 à 10 ;
- un robot de sol (100) selon la revendication 11 ;
- dans lequel, dans un état couplé, le robot de sol (100) est accueilli sur le dispositif d'accueil (205) et le dispositif de couplage (160) du robot de sol (100) est couplé à l'interface d'alimentation (230) de l'unité de montée d'escaliers (200) ;
- de sorte qu'à l'état couplé, le robot de sol (100) commande l'actionneur (220) du dispositif de montée d'escaliers (225) de l'unité de montée d'escaliers (200) et/ou l'alimente en énergie électrique, ce qui permet à l'unité de montée d'escaliers (200) de franchir l'escalier (705) avec le robot de sol (100).

13. Procédé pour le nettoyage de deux surfaces de sol (1100, 1105) reliées par un escalier (705) avec un système de nettoyage (700) selon la revendication 12, comprenant les étapes de procédé suivantes :
- accueil du robot de sol (100) sur le dispositif d'accueil (205) de l'unité de montée d'escaliers (200) ;
- couplage du dispositif de couplage (160) du robot de sol (100) à l'interface d'alimentation (230) de l'unité de montée d'escaliers (200) ;
- commande de l'actionneur (220) de l'unité de montée d'escaliers (200) avec l'unité de commande (150) du robot de sol (100) et/ou alimentation en énergie de l'actionneur (220) de l'unité de montée d'escaliers (200) à partir de l'accumulateur d'énergie (155) du robot de sol (100) ;
- de sorte que le dispositif de montée d'escaliers (225) est déplacé et l'unité de montée d'escaliers (200) franchit l'escalier (705) avec le robot de sol (100).

14. Procédé selon la revendication 13, dans lequel, lors de son entrée sur le dispositif d'accueil (205), le robot de sol (100) se déplace, au moins temporairement, approximativement parallèlement à un nez (710) d'une marche de l'escalier (705) et/ou dans lequel lors de sa sortie du dispositif d'accueil (205), le robot de sol (100) se déplace, au moins temporairement, approximativement parallèlement à un nez (710) d'une marche de l'escalier (705).

15. Procédé selon la revendication 13 ou 14, dans lequel l'appareil de commande (150) du robot de sol (100) utilise des signaux d'un capteur (145) du robot de sol (100) pour la commande de l'actionneur (220) de l'unité de montée d'escaliers (200).
